# EUROPEAN PATENT SPECIFICATION

(11) **EP 3 243 873 B1**
(45) Date of publication and mention of the grant of the patent: **24.04.2019**
(21) Application number: 16735070.1
(22) Date of filing: 07.01.2016
(51) Int. Cl.: C08L 7/00, B60C 1/00, C08K 3/04, C08K 3/36, C08L 61/06, C08L 65/00, C08L 93/04, C08L 99/00, C08L 101/00, C08K 3/22, C08K 5/09, C08K 5/18, C08K 5/132, C08K 5/47, C08K 5/548, C08L 9/00, C08L 57/02, C08L 91/00, C08K 5/32

(54) **RUBBER COMPOSITION, MEMBER FOR TREAD, PNEUMATIC TIRE, AND METHOD FOR PRODUCING RUBBER COMPOSITION**
KAUTSCHUKZUSAMMENSETZUNG, ELEMENT FÜR LAUFFLÄCHE, LUFTREIFEN UND VERFAHREN ZUR HERSTELLUNG EINER KAUTSCHUKZUSAMMENSETZUNG
COMPOSITION DE CAOUTCHOUC, ÉLÉMENT POUR BANDE DE ROULEMENT, PNEUMATIQUE, ET PROCÉDÉ DE FABRICATION DE COMPOSITION DE CAOUTCHOUC

(30) Priority: 08.01.2015 JP 2015002166
(43) Date of publication of application: 15.11.2017
(73) Proprietor: Bridgestone Corporation, Tokyo 104-8340 (JP)
(72) Inventor: SAKURAI, Hideyuki, Tokyo 104-8340 (JP)
(74) Representative: Oxley, Robin John George
(86) International application number: PCT/JP2016/050361
(87) International publication number: WO 2016/111331

(56) References cited:
- JP-A- S5 323 373
- JP-A- S5 323 373
- JP-A- 2008 303 328
- JP-A- 2008 303 328
- JP-A- 2012 092 179
- JP-A- 2012 092 179
- JP-A- 2012 246 415
- JP-A- 2012 246 415
- JP-A- 2014 024 921
- JP-A- 2014 024 921

## Description

### Technical Field

The present invention relates to a rubber composition, a tread member manufactured from the same and a pneumatic tire, and further relates to a process for producing the rubber composition.

### Background Art

Tires using natural rubber as a rubber component make it possible to secure friction between the tires and a road surface under the environment of a wide temperature range by maintaining fixed flexibility of the tire. Accordingly, a rubber composition for tires used natural rubber as a rubber component is enhanced in performances both on snow and ice road surfaces and wet road surfaces, and therefore it is useful from the viewpoint of enhancing safety. Further, the natural rubber originates in a natural product, so that it is useful as well from the viewpoint of influences exerted to the environment by the raw materials of the tires.

Described in, for example, patent document 1 are winter tires characterized in that a rubber composition containing at least one diene base rubber such as natural rubber and compounded with 5 to 50 parts by mass of a C5 base resin based on 100 parts by mass of a rubber component containing 30 % by mass or more of natural rubber and/or isoprene rubber in total is used for a tread rubber. The performances both on snow and ice road surfaces and wet road surfaces can be enhanced by adopting the composition described above.

However, when the natural rubber is used as the principal rubber component, the rubber composition in an unvulcanized state is more reduced in a viscosity than conventional synthetic rubbers for tires.

Also, if a plasticizer is applied to a rubber composition comprising natural rubber as a principal rubber component, the rubber composition in an unvulcanized state is further reduced in a viscosity. As a result thereof, a large problem is caused on workability when handling the sheet of the rubber composition in an unvulcanized state after an extrusion step.

Accordingly, formulations which are different from those obtained by merely modifying formulations having so far been used for conventional synthetic rubbers for tires are desired for rubber compositions which improve the performances of the tires both on snow and ice road surfaces and wet road surfaces.

However, it is neither described nor suggested in the patent document that in the rubber composition containing natural rubber, the unvulcanized rubber is increased in a viscosity and that the rubber composition after vulcanized is reduced in tan δ.

### Related Art Documents

### Patent documents

Patent document 1: JP 2009-256540A Outline of the Invention

### Problems to be solved by the invention

The present invention intends to solve the problems on the conventional arts described above. That is, an object of the present invention is to enhance, in a rubber composition for tires comprising natural rubber as a principal component of a rubber component, a viscosity of the rubber composition in an unvulcanized state to improve workability of the rubber composition and improve a low loss tangent (low tan δ) of the rubber composition after vulcanization while maintaining the performances both on snow and ice road surfaces and wet road surfaces.

### Means for solving the problems

Intense studies repeated by the inventors of the present invention have resulted in finding that the problems described above can be solved by a rubber composition comprising a rubber component (A) containing 60 % by mass or more of natural rubber, wherein the rubber composition comprises 8 to 40 parts by mass of a thermoplastic resin (B) and 0.1 to 3 parts by mass of poly-p-dinitrosobenzene (C) based on 100 parts by mass of the rubber component (A).

That is, the present invention comprises the following items (1) to (9).
(1) A rubber composition comprising a rubber component (A) containing 60 % by mass or more of natural rubber, wherein the rubber composition comprises 8 to 40 parts by mass of a thermoplastic resin (B) and 0.1 to 3 parts by mass of poly-p-dinitrosobenzene (C) based on 100 parts by mass of the rubber component (A).
(2) The rubber composition as described in the above item (1), comprising a reinforcing filler.
(3) The rubber composition as described in the above item (2), wherein the reinforcing filler is silica.
(4) The rubber composition as described in the above item (2), wherein the reinforcing filler comprises carbon black.
(5) The rubber composition as described in the above items (1) to (4), wherein the rubber composition contains 40 to 100 parts by mass of silica based on 100 parts by mass of the rubber component (A).
(6) The rubber composition as described in the above items (1) to (5), wherein the thermoplastic resin (B) is at least one thermoplastic resin selected from the group consisting of C5 to C9 petroleum resins, rosin base resins and alkylphenol formaldehyde resins.
(7) A tread member manufactured from the rubber composition as described in the above items (1) to (6).
(8) A pneumatic tire manufactured from the tread member as described in the above item (7).
(9) A process for producing a rubber composition comprising a rubber component (A) containing 60 % by mass or more of natural rubber, wherein the rubber composition is compounded with 8 to 40 parts by mass of a thermoplastic resin (B) and 0.1 to 3 parts by mass of poly-p-dinitrosobenzene (C) based on 100 parts by mass of the rubber component (A), whereby the rubber composition is increased in a viscosity.

### Effect of the invention

According to the present invention, compounding the rubber composition with the natural rubber and the thermoplastic resin makes it possible to enhance a viscosity of the rubber composition for tires in an unvulcanized state to improve workability thereof and improve a low loss tangent (low tan δ) of the rubber composition after vulcanization while enhancing a gripping property of the tire.

Included as well in the present invention is the effect of contributing to preservation of natural resources in terms of making it possible to obtain a rubber composition having high performances which has not so far been present by using natural rubber originating in a plant as a raw material for a principal component of a rubber component.

In the rubber composition of the present invention, the mechanism in which such the effect of the present invention as described above is brought about shall not be restricted to the following, and the effect is estimated to be attributable to that poly-p-dinitrosobenzene causes interaction with a double bond of a natural rubber polymer.

### MODE FOR CARRYING OUT THE INVENTION

The embodiments of the present invention shall be explained below in detail.

### [Rubber component]

In the rubber composition of the present invention, the natural rubber accounts for 60 % by mass or more based on the whole rubber components in the rubber composition. The rubber components other than the natural rubber in the rubber composition of the present invention shall not specifically be restricted, and capable of being used are, for example, diene base synthetic rubbers such as polyisoprene rubber (IR), polybutadiene rubber (BR), styrene-butadiene copolymer rubber (SBR), butyl rubber (IIR) and ethylene-propylene copolymer. The diene base synthetic rubbers may be modified polymers, and the diene base synthetic rubbers (unmodified polymers) may be blended with the modified polymers.

The rubber components may be used alone or in a blend of two or more kinds thereof.

The rubber components may be modified at ends for the purpose of enhancing dispersibility of the filler such as silica and carbon black.

### [Natural rubber]

The natural rubber contained in the rubber component in the present invention shall not specifically be restricted, and products which have so far publicly been used can widely be used.

The examples of the natural rubber include RSS, TSR#10, and TSR#20 which are generally used for tires, and in addition thereto, they include viscosity stabilizer-containing natural rubber, highly purified natural rubber, enzyme-treated natural rubber, and saponification-treated natural rubber. Capable of being used as the viscosity stabilizer are, for example, hydroxylamine sulfate, semicarbazide (NH₂NHCONH₂) or salts thereof, hydroxylamine, and hydrazide compounds (for example, propionic acid hydrazide). The highly purified natural rubber is natural rubber obtained by subjecting natural rubber latex to, for example, centrifugal separation to remove non-rubber components such as proteins. The enzyme-treated natural rubber is natural rubber subjected to enzyme treatment with enzymes such as protease, lipase and phospholipase. The saponification-treated natural rubber is natural rubber subjected to saponification treatment with alkalis (for example, NaOH).

### [Thermoplastic resin]

The thermoplastic resin which can be used in the present invention shall not specifically be restricted as long as it is compounded to meet the purpose described above.

The resin which can be used for the rubber composition of the present invention includes thermoplastic resins which have a molecular weight of several hundreds to several thousands and which provide natural rubber and synthetic rubber with an tackiness by compounding, and various natural resins and synthetic resins can be used.

To be specific, capable of being used are natural resins such as rosin base resins and terpene base resins and synthetic resins such as petroleum base resins, phenol base resins, coal base resins and xylene base resins.

The rosin base resins include glycerin or pentaerythritol esters of the following rosins, that is, gum rosins, tall oil rosins, wood rosins, hydrogenated rosins, disproportionated rosins, polymerized rosins and modified rosins, and the terpene base resins include terpene resins such as α-pinene base resins, β-pinene base resins and dipentene base resins, aromatic modified terpene resins, terpene phenol resins, and hydrogenated terpene resins.

Among the above natural resins, the polymerized rosins, the terpene phenol resins and the hydrogenated terpene resins are preferred from the viewpoints of abrasion resistance and a gripping characteristic of the rubber composition compounded therewith.

The petroleum base resins are obtained by polymerizing cracked oil fractions in the form of a mixture with a Friedel-Crafts catalyst, wherein the fractions contain unsaturated hydrocarbons such as olefins and diolefins which are by-produced together with petrochemical basic raw materials such as ethylene and propylene, for example, by thermal cracking of naphtha in the petrochemical industry.

The petroleum base resins include petroleum base resins such as aliphatic petroleum resins obtained by (co)polymerizing a C5 fraction obtained by thermal cracking of naphtha, aromatic petroleum resins obtained by (co)polymerizing a C9 fraction obtained by thermal cracking of naphtha, copolymerized petroleum resins obtained by copolymerizing the C5 fraction and the C9 fraction each described above, alicyclic petroleum resins such as hydrogenated petroleum resins and dicyclopentadiene base resins, and styrene base resins such as polymers of styrene or substituted styrene and copolymers of styrene and other monomers.

Usually contained in the C5 fraction obtained by thermal cracking of naphtha are olefinic hydrocarbons such as 1-pentene, 2-pentene, 2-methyl-1-butene, 2-methyl-2-butene and 3-methyl-1-butene, and diolefinic hydrocarbons such as 2-methyl-1,3-butadiene, 1,2-pentadiene, 1,3-pentadiene and 3-methyl-1,2-butadiene.

The aromatic petroleum resins obtained by (co)polymerizing the C9 fraction are resins obtained by polymerizing aromatic compounds having 9 carbon atoms comprising vinyltoluene and indene as principal monomers, and the specific examples of the C9 fraction obtained by thermal cracking of naphtha include styrene homologues such as α-methylstyrene, β-methylstyrene and γ-methylstyrene, and indene homologues such as indene and coumarone.

The trade names thereof include Petrojin manufactured by Mitsui Chemicals, Inc., Petraito manufactured by Mikuni Chemical Co., Ltd., Neopolymer manufactured by JXTG Nippon Oil & Energy Corporation, and Petcoal manufactured by Tosoh Corporation.

Further, modified petroleum resins obtained by modifying the petroleum resins made from the C9 fraction described above are suitably used in the present invention as resins which make it possible to allow the gripping property and the workability in processing to be compatible.

The modified petroleum resins include C9 base petroleum resins obtained by modifying the C9 base petroleum resins with unsaturated alicyclic compounds, C9 base petroleum resins obtained by modifying the resins with compounds having hydroxyl groups, C9 base petroleum resins obtained by modifying the resins with unsaturated carboxylic acid compounds.

The preferred unsaturated alicyclic compounds include cyclopentadiene, and methylcyclopentadiene, and dicyclopentadiene, cyclopentadiene/methylcyclopentadiene codimers, and tricyclopentadiene as Diels-Alder reaction products of alkylcyclopentadiene, and dicyclopentadiene is particularly preferred. The dicyclopentadiene-modified C9 base petroleum resins can be obtained by thermal polymerization under the presence of both dicyclopentadiene and the C9 fraction. The dicyclopentadiene-modified C9 base petroleum resins include, for example, Neopolymer 130S manufactured by JXTG Nippon Oil & Energy Corporation.

The compounds having hydroxyl groups include alcohol compounds and phenol compounds.

The specific examples of the alcohol compounds include, for example, alcohol compounds having a double bond such as allyl alcohol and 2-butene-1,4-diol.

Capable of being used as the phenol compounds are phenol, alkylphenols such as cresol, xylenol, p-t-butylphenol, p-octylphenol and p-nonylphenol.

The above hydroxyl group-containing compounds may be used alone or in combination of two or more kinds thereof.

The hydroxyl group-containing C9 base petroleum resins can be produced as well by a process in which (meth)acrylic acid alkyl esters are thermally polymerized with a petroleum fraction to introduce the ester groups into the petroleum resins and then the ester groups are reduced, a process in which double bonds are allowed to remain in the petroleum resins or introduced thereinto and then the double bonds are hydrated, and the other process.

The products obtained by the various processes described above can be used as the hydroxyl group-containing C9 base petroleum resins in the present invention, and the phenol-modified petroleum resins are preferably used from the viewpoints of the performances and the manufaturing. The phenol-modified petroleum resins are obtained by cationically polymerizing the C9 fraction under the presence of phenol, and they are readily modified and inexpensive.

The phenol-modified C9 base petroleum resins include, for example, Neopolymer E-130 manufactured by JXTG Nippon Oil & Energy Corporation.

Further, products obtained by modifying the C9 base petroleum resins with ethylenically unsaturated carboxylic acid can be used as the C9 base petroleum resins modified with the unsaturated carboxylic acid compounds.

The representative examples of the ethylenically unsaturated carboxylic acid include (anhydrous) maleic acid, fumaric acid, itaconic acid, (anhydrous) tetrahydrophthalic acid, (meth)acrylic acid, and citraconic acid.

The unsaturated carboxylic acid-modified C9 base petroleum resins can be obtained by thermally polymerizing the C9 base petroleum resins with the ethylenically unsaturated carboxylic acid. The unsaturated carboxylic acid-modified C9 base petroleum resins include, for example, Neopolymer 160 manufactured by JXTG Nippon Oil & Energy Corporation.

Also, the copolymer resins of the C5 fraction and the C9 fraction which are obtained by thermal cracking of naphtha can suitably be used in the present invention.

In this regard, the C9 fraction shall not specifically be restricted, and it is preferably a C9 fraction obtained by thermal cracking of naphtha.

To be specific, it includes TS30, TS30-DL, TS35, and TS35-DL of a Structol series manufactured by Schill & Seilacher Inc.

The phenol base resins described above include alkylphenol formaldehyde base resins and the rosin-modified compounds thereof, alkylphenol acetylene base resins, modified alkylphenol resins, and terpene phenol resins, and to be specific, they include trade name Hitanol 1502 manufactured by Hitachi Chemical Co., Ltd. which is a novolac type alkylphenol resin, trade name Koresin manufactured by BASF AG which is a p-t-butylphenol acetylene resin.

Also, the coal base resins include coumarone indene resins, and the xylene base resins include xylene formaldehyde resins.

In addition to the above, polybutene can also be used as a resin having a tackifying property.

Among the above synthetic resins, the copolymer resins of the C5 fraction and the C9 fraction, the aromatic petroleum resins obtained by (co)polymerizing the C9 fraction, the phenol base resins, and the coumarone indene resins are preferred from the viewpoints of abrasion resistance and a gripping property of the rubber composition compounded therewith.

### [Reinforcing filler]

A reinforcing filler such as silica and carbon black may be compounded with the rubber composition of the present invention.

### [Silica]

A process for producing silica used for the rubber composition of the present invention shall not specifically be restricted, and products which have so far publicly been known can widely be used. It includes, for example, silica produced by a dry method, precipitated silica produced by a wet method, and synthetic silicate. Silica modified with a silane coupling agent can be listed.

A content of the silica contained in the rubber composition of the present invention is 10 to 100 parts by weight, preferably 60 to 100 parts by weight and more preferably 40 to 100 parts by weight based on 100 parts by weight of the rubber component. It is preferably 100 parts by weight or less from the viewpoint of inhibiting the heat build -up.

The silica is estimated to have possibility to take part in interaction between poly-p-dinitrosobenzene and double bonds in the rubber polymer contained in the rubber component, and the silica is compounded preferably in the rubber composition of the present invention.

### [Silane coupling agent]

A silane coupling agent which can be used in the present invention shall not specifically be restricted. When silica is compounded with a solution containing a rubber component, the silane coupling agent is preferably used from the viewpoint of reinforcing silica dispersed in the rubber component.

The silane coupling agent which can be used shall not specifically be restricted and includes, for example, at least one of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropylmethoxysilane, 3-chloropropyltriethoxysilane, 2-chloroethyltrimethoxysilane, 2-chloroethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, 3-nitropropyldimethoxymethylsilane, 3-chloropropyldimethoxymethylsilane, dimethoxymethylsilylpropyl-N,N-dimethylthiocarbamoyl tetrasulfide, and dimethoxymethylsilylpropylbenzothiazole tetrasulfide.

The silane coupling agent is estimated to make it possible to strengthen interaction between silica, poly-p-dinitrosobenzene and double bonds in the rubber polymer contained in the rubber component, and it is preferably used, if necessary, in combination with silica in the rubber composition of the present invention.

### [Carbon black]

The rubber composition of the present invention may contain carbon black as a reinforcing filler. The carbon black which can be used in the present invention shall not be limited in a kind or a grade.

A compounding amount of the carbon black is preferably 100 parts by mass or less from the viewpoint of inhibiting the heat built-up.

### [Poly-p-dinitrosobenzene]

The poly-p-dinitrosobenzene used in the present invention shall not specifically be restricted, and commercially available products can be used. The poly-p-dinitrosobenzene used in the present invention shall not specifically be restricted, and it has a structure shown by CAS No. 9003-34-3.

A mixture containing a fixed amount of, for example, 20 % or more of poly-p-dinitrosobenzene may be used as it is for the poly-p-dinitrosobenzene used in the present invention.

The poly-p-dinitrosobenzene used in the present invention is compounded in an amount of 0.1 to 5 parts by mass, preferably 0.1 to 3 parts by mass and more preferably 0.2 to 0.6 part by mass based on the rubber composition.

### [Rubber composition]

The rubber composition of the present invention can be compounded with the rubber component (A) containing 60 % by mass or more of natural rubber, the thermoplastic resin (B) and the poly-p-dinitrosobenzene (C), and in addition thereto, the reinforcing filler and compounding ingredients both of which are usually used in the rubber industry, for example, antioxidants, softening agents, stearic acid, vulcanization accelerators, vulcanization accelerator activators, and vulcanizing agents can suitably be selected and compounded therewith as long as the objects of the present invention are not damaged. Commercial products can suitably be used as the compounding ingredients.

Also, the rubber composition of the present invention is obtained by compounding the rubber component (A), the thermoplastic resin (B) and the poly-p-dinitrosobenzene (C) each described above, if necessary, with various compounding ingredients suitably selected to obtain a mixture and kneading the mixture.

The rubber composition of the present invention can be vulcanized in producing parts and members of a tire and used.

The rubber composition of the present invention can suitably be used for the application of, for example, a tread member of a pneumatic tire for passenger cars.

### EXAMPLES

The present invention shall be explained below with reference to examples. In the present invention, various measurements were carried out by the following methods.

### [Measuring method of unvulcanized rubber viscosity]

The unvulcanized rubber viscosity was measured based on JIS K 6300-1 : 2001 (Mooney viscosity).

The values of the respective examples and comparative examples were shown by an index, wherein the value of Comparative Example 1 was set to 100. It is shown that the higher the value is, the higher the viscosity is.

### [Measuring method of tan δ]

The values of tan δ were measured at 60°C by means of a spectrometer (dynamic viscoelasticity tester) manufactured by Ueshima Seisakusho Co., Ltd. at a frequency of 52 Hz, an initial strain factor of 2 % and a dynamic strain factor of 1 %, and they were shown by an index, wherein the value of Comparative Example 1 was set to 100. It is shown that the higher the value is, the smaller the tan δ and the hysteresis loss are.

### Examples 1 to 8 and Comparative Examples 1 to 5

Rubber compositions were prepared by an ordinary method according to a receipe shown in the following Table 1.

Numerical values in the respective columns of Table 1 show mass parts.

An unvulcanized rubber viscosity and tan δ of the respective rubber compositions obtained were measured by the measuring methods described above.

The results thereof are shown in Table 1.

**Table 1**

| | | Comparative Example | Example | | | | | | | | Comparative Example | | | |
|---|---|---|---|---|---|---|---|---|---|---|---|---|---|---|
| | | 1 | 1 | 2 | 3 | 4 | 5 | 6 | 7 | 8 | 2 | 3 | 4 | 5 |
| Composition | NR ∗1 | 60 | 60 | 60 | 60 | 60 | 60 | 60 | 80 | 100 | 60 | 60 | 40 | 40 |
| | BR ∗2 | 40 | 40 | 40 | 40 | 40 | 40 | 40 | 20 | 0 | 40 | 40 | 60 | 60 |
| | Carbon black ∗3 | 10 | 10 | 10 | 10 | 10 | 10 | 10 | 10 | 10 | 10 | 10 | 10 | 10 |
| | Silica ∗4 | 50 | 50 | 50 | 50 | 50 | 50 | 50 | 50 | 50 | 50 | 50 | 50 | 50 |
| | Silane coupling agent | 8 | 8 | 8 | 8 | 8 | 8 | 8 | 8 | 8 | 8 | 8 | 8 | 8 |
| | Process oil ∗5 | 5 | 5 | 5 | 5 | 5 | 5 | 5 | 5 | 5 | 5 | 5 | 5 | 5 |
| | Rosin resin ∗6 | 15 | 15 | | | | 20 | 30 | 15 | 15 | | | 15 | 15 |
| | C9 resin ∗7 | | | 15 | 10 | | | | | | | | | |
| | Alkylphenol formaldehyde resin ∗8 | | | | | 15 | | | | | | | | |
| | Stearic acid | 1.00 | 1.00 | 1.00 | 1.00 | 1.00 | 1.00 | 1.00 | 1.00 | 1.00 | 1.00 | 1.00 | 1.00 | 1.00 |
| | Zinc oxide | 1.50 | 1.50 | 1.50 | 1.50 | 1.50 | 1.50 | 1.50 | 1.50 | 1.50 | 1.50 | 1.50 | 1.50 | 1.50 |
| | Antioxidant ∗9 | 1.00 | 1.00 | 1.00 | 1.00 | 1.00 | 1.00 | 1.00 | 1.00 | 1.00 | 1.00 | 1.00 | 1.00 | 1.00 |
| | Vulcanization accelerator ∗10 | 3.00 | 3.00 | 3.00 | 3.00 | 3.00 | 3.00 | 3.00 | 3.00 | 3.00 | 3.00 | 3.00 | 3.00 | 3.00 |
| | Poly-p-dinitrosobenzene ∗11 | | 0.2 | 0.2 | 0.2 | 0.2 | 0.2 | 0.2 | 0.2 | 0.2 | | 0.2 | | 0.2 |
| Workability | Unvulcanized viscosity | 100 | 135 | 140 | 141 | 130 | 130 | 125 | 133 | 131 | | 115 | | 107 |
| Rubber physical property | 60°C tan δ | 100 | 113 | 114 | 116 | 113 | 111 | 109 | 111 | 109 | 100 | 105 | 100 | 105 |

| | | | | | | | | | | | | | | |
|---|---|---|---|---|---|---|---|---|---|---|---|---|---|---|
| ∗1 to ∗11 in Table 1 described above show the followings. ∗1: Natural rubber : RSS #3 ∗2: Butadiene rubber (cis-1,4-polybutadiene, BR01 manufactured by JSR Corporation) ∗3: Carbon black (N234) ∗4: Silica (trade name: Nipsil AQ, manufactured by Tosoh Silica Corporation) ∗5: Process oil (trade name: Process X-140, manufactured by Japan Energy Corporation) ∗6: Rosin (trade name: High Rosin S, manufactured by TaishaSho seiyu Co., Ltd.) ∗7: C9 resin (trade name: Neopolymer 140, manufactured by Nippon Petrochemicals Co., Ltd.) ∗8: Alkylphenol formaldehyde resin (trade name: R7510PJ, manufactured by SI Group, Inc.) ∗9: Antioxidant : N-(1,3-dimethylbutyl)-N'-phenyl-p-phenylenediamine (trade name: Nocrac 6C, manufactured by Ouchi Shinko Chemical Industrial Co., Ltd.) ∗10: Vulcanization accelerator : dibenzothiazyl disulfide (trade name: NOCCELER (registered trademark) DM-P, manufactured by Ouchi Shinko Chemical Industrial Co., Ltd.) ∗11: Poly-p-dinitrosobenzene (trade name: ACTOR DB, manufactured by Kawaguchi Chemical Industry Co., Ltd.) | | | | | | | | | | | | | | |

As apparent from the results shown in Table 1, the rubber compositions prepared in Examples 1 to 8 falling in the scope of the present invention are enhanced more in the sum of the evaluation values of the unvulcanized viscosity and the 60°C tan δ than the rubber compositions prepared in Comparative Examples 1, 3 and 5 falling outside the scope of the present invention. Also, the thermoplastic resin is not compounded with the rubber composition in Comparative Example 2, and a comounding rate of the natural rubber is low in Comparative Example 4.

### INDUSTRIAL APPLICABILITY

The rubber composition of the present invention can suitably be used as the raw material of the tread member in the tires for passenger cars.

## Claims

1. A rubber composition comprising a rubber component (A) containing 60 % by mass or more of natural rubber, wherein the rubber composition comprises 8 to 40 parts by mass of a thermoplastic resin (B) and 0.1 to 3 parts by mass of poly-p-dinitrosobenzene (C) based on 100 parts by mass of the rubber component (A).

2. The rubber composition as described in claim 1, comprising a reinforcing filler.

3. The rubber composition as described in claim 2, wherein the reinforcing filler is silica.

4. The rubber composition as described in claim 2, wherein the reinforcing filler comprises carbon black.

5. The rubber composition as described in claims 1 to 4, wherein the rubber composition contains 40 to 100 parts by mass of silica based on 100 parts by mass of the rubber component (A).

6. The rubber composition as described in claims 1 to 5, wherein the thermoplastic resin (B) is at least one thermoplastic resin selected from the group consisting of C5 to C9 petroleum resins, rosin base resins and alkylphenol formaldehyde resins.

7. A tread member manufactured from the rubber composition as described in claims 1 to 6.

8. A pneumatic tire manufactured from the tread member as described in claim 7.

9. A process for producing a rubber composition comprising a rubber component (A) containing 60 % by mass or more of natural rubber, wherein the rubber composition is compounded with 8 to 40 parts by mass of a thermoplastic resin (B) and 0.1 to 3 parts by mass of poly-p-dinitrosobenzene (C) based on 100 parts by mass of the rubber component (A), whereby the rubber composition is increased in a viscosity.

## Patentansprüche

1. Kautschukzusammensetzung, umfassend eine Kautschukkomponente (A), die 60 Masse-% oder mehr Naturkautschuk enthält, wobei die Kautschukzusammensetzung, bezogen auf 100 Masseteile der Kautschukkomponente (A), 8 bis 40 Gewichtsteile eines thermoplastischen Harzes (B) und 0,1 bis 3 Gewichtsteile Poly-p-dinitrosobenzol (C) enthält.

2. Kautschukzusammensetzung nach Anspruch 1, die einen verstärkenden Füllstoff umfasst.

3. Kautschukzusammensetzung nach Anspruch 2, wobei der verstärkende Füllstoff Siliciumdioxid ist.

4. Kautschukzusammensetzung nach Anspruch 2, wobei der verstärkende Füllstoff Ruß umfasst.

5. Kautschukzusammensetzung nach den Ansprüchen 1 bis 4, wobei die Kautschukzusammensetzung 40 bis 100 Masseteile Siliciumdioxid enthält, bezogen auf 100 Masseteile der Kautschukkomponente (A).

6. Kautschukzusammensetzung nach den Ansprüchen 1 bis 5, wobei das thermoplastische Harz (B) mindestens ein thermoplastisches Harz ist, das aus der Gruppe ausgewählt ist, die aus C5 bis C9-Erdölharzen, Harzen auf Kolophoniumbasis und Alkylphenolformaldehydharzen besteht.

7. Laufflächenelement, das aus der Kautschukzusammensetzung nach den Ansprüchen 1 bis 6 hergestellt ist.

8. Luftreifen, der aus dem Laufflächenelement nach Anspruch 7 hergestellt ist.

9. Verfahren zur Herstellung einer Kautschukzusammensetzung, die eine Kautschukkomponente (A) umfasst, die 60 Masse-% oder mehr Naturkautschuk enthält, wobei die Kautschukzusammensetzung mit 8 bis 40 Masseteilen eines thermoplastischen Harzes (B) und 0,1 bis 3 Masseteilen Poly-p-dinitrosobenzol (C), bezogen auf 100 Masseteile der Kautschukkomponente (A), gemischt wird, wodurch eine Viskosität der Kautschukzusammensetzung erhöht wird.

## Revendications

1. Composition de caoutchouc comprenant un composant de caoutchouc (A) contenant 60% en masse ou plus de caoutchouc naturel, la composition de caoutchouc comprenant 8 à 40 parties en masse d'une résine thermoplastique (B) et 0,1 à 3 parties en masse de poly-p-dinitrosobenzène (C) sur la base de 100 parties en masse du composant de caoutchouc (A).

2. Composition de caoutchouc selon la revendication 1, comprenant une charge renforçante.

3. Composition de caoutchouc selon la revendication 2, dans laquelle la charge renforçante est de la silice.

4. Composition de caoutchouc selon la revendication 2, dans laquelle la charge renforçante comprend du noir de carbone.

5. Composition de caoutchouc selon les revendications 1 à 4, dans laquelle la composition de caoutchouc contient 40 à 100 parties en masse de silice sur la base de 100 parties en masse du composant caoutchouc (A).

6. Composition de caoutchouc selon les revendications 1 à 5, dans laquelle la résine thermoplastique (B) est au moins une résine thermoplastique choisie dans le groupe constitué des résines de pétrole en C5 à C9, des résines à base de colophane et des résines alkylphénol-formaldéhyde.

7. Elément de bande de roulement fabriqué à partir de la composition de caoutchouc telle que décrite dans les revendications 1 à 6.

8. Pneumatique fabriqué à partir de la bande de roulement selon la revendication 7.

9. Procédé de production d'une composition de caoutchouc comprenant un composant de caoutchouc (A) contenant 60% en masse ou plus de caoutchouc naturel, dans lequel la composition de caoutchouc est composée de 8 à 40 parties en masse d'une résine thermoplastique (B) et de 0,1 à 3 parties en masse de poly-p-dinitrosobenzène (C) sur la base de 100 parties en masse du composant caoutchouc (A), une viscosité de la composition de caoutchouc étant ainsi augmentée.
